# EUROPÄISCHE PATENTSCHRIFT

(11) **EP 2 077 012 B1**
(45) Veröffentlichungstag und Bekanntmachung des Hinweises auf die Patenterteilung: **05.01.2011**
(21) Anmeldenummer: 07818460.3
(22) Anmeldetag: 26.09.2007
(51) Int. Cl.: H04L 12/58

(54) **Verfahren, System und Datenverarbeitungsprogramm zum Nachrichtenaustausch in einem Mobilfunksystem**
Method, system and computer program for exchanging messages in a mobile radio network
Procédé, système et programme informatique d'échange d'informations dans un système de radiocommunication mobile

(30) Priorität: 13.10.2006 DE 102006049034
(43) Veröffentlichungstag der Anmeldung: 08.07.2009
(73) Patentinhaber: T-Mobile International AG, 53227 Bonn (DE)
(72) Erfinder: RÖBKE, Matthias, 80859 Köln (DE); HECHWARTNER, Roland, 1140 Wien (AT)
(74) Vertreter: Riebling, Peter
(86) Internationale Anmeldenummer: PCT/EP2007/008377
(87) Internationale Veröffentlichungsnummer: WO 2008/046495

(56) Entgegenhaltungen:
- US-A- 5 875 302
- US-A1- 2004 137 884
- US-A1- 2005 254 481

## Beschreibung

Die Erfindung betrifft ein Verfahren zum Nachrichtenaustausch in einem Mobilfunksystem nach dem Anspruch 1, ein entsprechendes System gemäß dem Anspruch II sowie ein Datenverarbeitungsprogramm gemäß dem Anspruch 12.

Nach dem Stand der Technik ist es heute möglich, im Internet Nachrichten mit anderen Nutzern auszutauschen. Oft werden hierfür "Instant Messaging" Dienste benutzt, welche die ausgetauschten Nachrichten speichern. Diese sogenannten "Nachrichten-Threads" können von den an der Kommunikation beteiligten Nutzern eingesehen werden. Ein Thread (englisch) ist wörtlich ein Faden, Garn oder Strang. Im übertragenen Sinn wird unter Thread ein Gedankengang, auch Diskussionsstrang, oder eine Folge von Diskussionsbeiträgen in einem (Internet-) Forum verstanden. Die Datenhaltung der Nachrichtenbeiträge erfolgt hier im verwendeten Kommunikationsnetz, so dass jeder Nutzer von einem beliebigen Endgerät (PC...) den Nachrichtenfluss einsehen kann.

Im Bereich des Mobilfunks sind neben "Instant Messaging" Diensten andere, sogenannte "Store and Forward" Dienste bekannt. Zu diesen Diensten gehören SMS (Short Messaging Service), MMS (Multimedia Messaging Service), EMS (Enhanced Messaging Service) etc.

In der heutigen Mobilfunklandschaft sind diese Dienste als singuläre technische Lösungen (sogenannte Silos) realisiert, d. h. jeder Dienst existiert unabhängig von dem jeweils anderen, wobei sich schon heute einzelne Funktionalitäten der beschriebenen Dienste überlappen; so ist es z. B. sowohl mit einem MMS Dienst als auch mit einem SMS Dienst möglich Text Nachrichten zu versenden.

Der beschriebene Silo Ansatz soll in absehbarer Zeit von einem sogenannten konvergenten Messaging System, auch bezeichnet als Unified Messaging System, abgelöst werden. Ein solches konvergentes Messaging System wird die einzelnen Funktionalitäten der heute existierenden Messaging Infrastrukturen vereinen und einen Nachrichtenaustausch auf einer übergeordneten Messaging Architektur erlauben.

US 2004/0137884 A1 offenbart ein Verfahren zum Nachrichtenaustausch in einem Mobilfunksystem unter Verwendung eines konvergenten Messaging Systems, das einen Austausch von Nachrichten zwischen Endgeräten von zwei oder mehreren Benutzern erlaubt. Seitens eines Endgeräts können zusammen gehörende Nachrichten, insbesondere auch Nachrichten verschiedener Nachrichtenformate, als Thread erkannt und am Endgerät angezeigt werden.

US 5 875 302 A offenbart ein Kommunikations-Managementsystem zur Verwaltung von unterschiedlicher Nachrichten-Threads von verschiedenen Benutzern oder Benutzergruppen. Das System unterstützt Nachrichten verschiedener Nachrichtenformate.

Ein Problem ist allerdings zu Beginn einer Konversation (Nachrichtenaustausch) zu erkennen, ob sich die Kommunikation der Nutzer zu einem Nachrichten-Thread entwickelt oder ob der Nachrichtenaustausch nur ein einmaliges Ereignis darstellt.

Die Aufgabe der Erfindung besteht darin, ein Verfahren zum Nachrichtenaustausch in einem Mobilfunksystem anzugeben, das im Rahmen eines konvergenten Messaging Systems eine Verwendung von Nachrichten-Threads unterstützt. Insbesondere soll es möglich sein, einen singulären Austausch von Nachrichten von Nachrichten-Threads zu unterscheiden.

Diese Aufgabe wird erfindungsgemäß durch ein Verfahren, ein System und ein Datenverarbeitungsprogramm mit den Merkmalen der Ansprüche 1, 11 bzw. 12 gelöst.

Bevorzugte Ausgestaltungen und weitere vorteilhafte Merkmale der Erfindung sind in den abhängigen Ansprüchen angegeben.

Einem Benutzer eines konvergenten Messaging Dienstes wird die Nutzung der Erfindung so einfach wie möglich gemacht. In vorteilhafter Weise muss der Nutzer nicht von vornherein (vor Erstellung bzw. Absendung der Nachricht) entscheiden, ob ein "Nachrichten Thread" gestartet oder eine Einzelnachricht versendet werden soll. Dem Benutzer soll mit dem Eintreffen einer Antwort auf eine vorher gesendete Nachricht die Historie, d. h. die ursprüngliche Nachricht und Antwort, angezeigt werden.

Die Grundidee der Erfindung beruht darauf, dass ein Nachrichten-Thread seitens eines Endgeräts als solcher erkannt wird, sobald auf eine zuvor vom Endgerät versendete Nachricht geantwortet wird. Erfindungsgemäß wir dieses vom Terminal bzw. vom Messaging Client, welcher auf dem Endgerät installiert ist, detektiert.

Der Vorteil der Erfindung ist darin zu sehen, dass durch eine Unterscheidung der beiden beschriebenen Vorfälle, nämlich singulär Nachrichtenaustausch gegenüber Nachrichten-Thread, die Historie für singuläre Nachrichtenkommunikation nicht durch ein konvergentes Messaging System (im Netzwerk) gespeichert werden muss. Dennoch wird dem Benutzer ab der ersten Antwort auf eine von ihm versendete Nachricht die betreffende Historie angezeigt. Der Zeitpunkt oder die Bedingungen, ab dem bzw. unter denen der Nachrichten-Thread netzwerkseitig gespeichert wird, können vorzugsweise durch Parameter seitens des Benutzers wählbar sein. Die Parameter können z. B. auf die Abfolge der Nachrichten (z.B. ab erster Antwort,...) bezogen sein.

Ein Ausführungsbeispiel der Erfindung wir nun anhand der Zeichnungen beschrieben.
Figur 1 zeigt schematisch die Übermittlung einer einzelnen Nachricht zwischen zwei Endgeräten über ein konvergentes Messaging System.
Figur 2 zeigt schematisch einen Austausch einer Nachricht mit Rückantwort zwischen zwei Endgeräten über ein konvergentes Messaging System.
Figur 3 zeigt den Nachrichtenfluss zwischen zwei Endgeräten und dem konvergenten Messaging System im Rahmen der Erfindung.

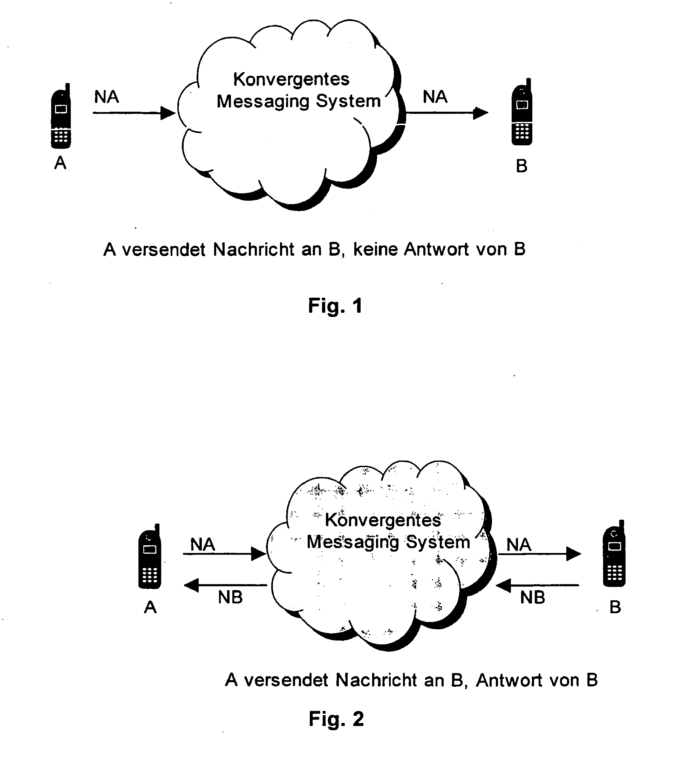

Wie in Figur 1 beschrieben, versendet beispielsweise ein Nutzer A mit einem Endgerät A eine konvergente Nachricht NA mit Hilfe einer zugehörigen Netzinfrastruktur eines konvergenten Messaging Systems an einen Nutzer B eines Endgeräts B. Wird auf diese Nachricht NA von Seiten des Nutzers B nicht geantwortet, so wird diese Nachricht vom Endgerät A als singulär angesehen. Die Nachricht NA wird nicht im Netzwerk des konvergenten Messaging Systems gespeichert. Die Nachricht NA kann jedoch im Endgerät A bzw. in einem Messagingclient des Endgeräts A gespeichert werden, um zu einem späteren Zeitpunkt einen Nachrichten-Thread zu detektieren.

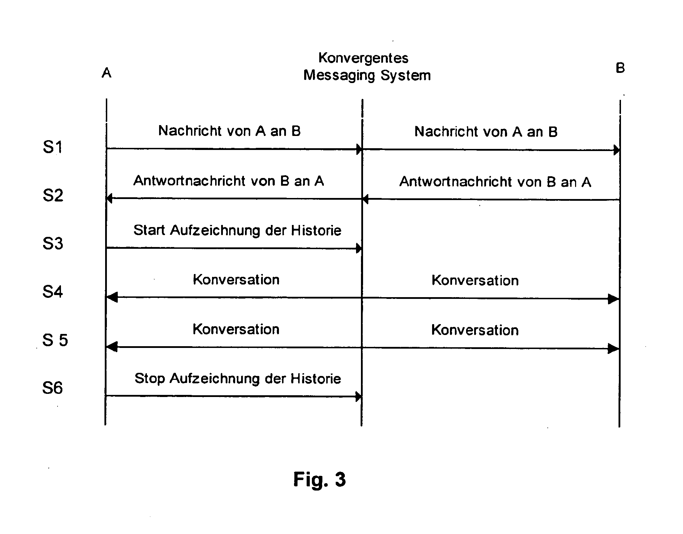

Figur 2 zeigt den Fall, bei dem der Nutzer B auf die von Nutzer A mit dem Endgerät A versendete Nachricht NA mit einer Nachricht NB antwortet. Diese Antwortnachricht NB wird an das Endgerät A und somit an den Nutzer A zugestellt. Dieser Nachrichtenfluss ist in den Schritten S1 und S2 von Figur 3 nochmals verdeutlicht.

Das Endgerät A (bzw. der entsprechende Messagingclient) erkennt, z. B. an einer entsprechenden Referenz, welche der Ursprungsnachricht NA zugewiesen wurde, dass es sich bei der Nachricht NB um eine Antwort auf eine originär von Endgerät A versendete Nachricht NA handelt. Somit hat Endgerät A detektiert, dass es sich bei der zugrunde liegenden Konversation um einen Nachrichten-Thread handelt. Es kann nun eine Aufzeichnung des Nachrichten-Threads im Netzwerk initiiert werden.

Um eine Aufzeichnung im Netzwerk der bereits versendeten Nachrichten NA, NB und des noch zu erwartenden Nachrichtenaustausches einzuleiten, wird erfindungsgemäß eine Protokollnachricht (Figur 3, Schritt S3) vom Endgerät A, welches den Nachrichten-Thread detektiert hat, an das konvergente Messaging System versendet. Diese Protokollnachricht beinhaltet sowohl den Kontext beider zuvor ausgetauschter Nachrichten NA, NB, als auch eine Aufforderung an das konvergente Messaging System, alle weiteren Nachrichten, welche zwischen den beiden Nutzern A und B ausgetauscht werden aufzuzeichnen.

In Folge dieser Protokollnachricht werden alle Nachrichten, welche zwischen den beiden Nutzern der Endgeräte A und B ausgetauscht werden vom konvergenten Messaging System in einer Konversationshistorie des zugrundeliegenden Nachrichten-Threads gespeichert. Dies ist in den Schritten S4 und S5 von Figur 3 verdeutlicht.

Beide Nutzer A, B, bzw. die Messaging Clients, welche auf den Endgeräten A, B der Nutzer installiert sind, sind im Folgenden in der Lage die betreffende Konversationshistorie vom konvergenten Messaging System anzufordern und auf dem jeweiligen Endgerät anzuzeigen. Dieses wird technisch durch einen entsprechenden Protokollbefehl realisiert, welcher von Endgerät des Nutzers bzw. dem Messaging Client, welcher auf dem Endgerät installiert ist, an das konvergente Messaging System geschickt wird. Das konvergente Messaging System reagiert auf diesen Protokollbefehl indem es dem Messaging Client die gewünschte Nachrichtenhistorie zur Verfügung stellt.

Sollte die Ursprungsnachricht NA (wie oben beschrieben) an mehrere Adressaten gerichtet sein, so wird das beschriebene Prozedere angestoßen, sobald einer der Adressaten auf die Nachricht NA antwortet. In diesem Fall wird jegliche Konversation - egal von welchen Adressaten - der Nachrichtenhistorie hinzugefügt. Das Kriterium für das Hinzufügen einer Nachricht ist hier lediglich, das der Kreis der Adressaten dem der Ursprungsnachricht entspricht. Alle in den Nachrichten-Thread involvierten Nutzer bzw. deren Messaging Clients sind wie oben beschrieben in der Lage, die Nachrichtenhistorie vom konvergenten Messaging System anzufordern.

Ein Ende der Aufzeichnung kann durch überschreiten eines Zeitlimits, in dem kein Nachrichtenaustausch stattgefunden hat, oder durch eine dedizierte Aufforderung eines Messaging Clients eines der in die Konversation involvierten Nutzer, erfolgen; dieses wird durch einen entsprechenden Protokollbefehl realisiert, der vom jeweiligen Nutzer an das konvergente Messaging System übermittelt wird.

## Patentansprüche

1. Verfahren zum Nachrichtenaustausch in einem Mobilfunksystem unter Verwendung eines konvergenten Messaging Systems, das einen Austausch von Nachrichten zwischen Endgeräten (A, B) von zwei oder mehreren Benutzern erlaubt, wobei dass seitens eines Endgeräts ein Nachrichten-Thread erkannt wird, sobald ein Endgerät (A) von einem anderen Endgerät (B) eine Antwort (NB) auf eine zuvor abgesendete Nachricht (NA) erhält,
wobei bei Erkennung eines Nachrichten-Threads von diesem Endgerät (A) eine Aufzeichnung des Nachrichtenaustausches im konvergenten Messaging System ausgelöst wird, **dadurch gekennzeichnet, dass** die Aufzeichnung des Nachrichtenaustausches durch eine Protokollnachricht (S3) ausgelöst wird, die vom Endgerät (A), welches den Nachrichten-Thread detektiert hat, an das konvergente Messaging System gesendet wird.

2. Verfahren nach einem der vorhergehenden Ansprüche, **dadurch gekennzeichnet, dass** der Zeitpunkt oder die Bedingungen, ab dem / unter denen der Nachrichtenaustausch netzwerkseitig gespeichert wird, seitens des Benutzers wählbar sind.

3. Verfahren nach einem der vorhergehenden Ansprüche, **dadurch gekennzeichnet, dass** die zuvor abgesendete Nachricht (NA) im Endgerät (A) bzw. in einem Messagingclient des Endgeräts (A) vorsorglich gespeichert wird, um zu einem späteren Zeitpunkt einen Nachrichten-Thread zu detektieren

4. Verfahren nach einem der vorhergehenden Ansprüche, **dadurch gekennzeichnet, dass** das Endgerät (A) an einer entsprechenden Referenz, welche der zuvor abgesendeten Nachricht (NA) zugewiesen wurde, erkennt, dass es sich um eine Antwort auf eine originär vom Endgerät (A) versendete Nachricht (NA) handelt.

5. Verfahren nach einem der vorhergehenden Ansprüche, **dadurch gekennzeichnet, dass** die Protokollnachricht sowohl den Kontext beider zuvor ausgetauschter Nachrichten (NA, NB) als auch eine Aufforderung an das konvergente Messaging System umfasst, alle weiteren Nachrichten, welche zwischen den beiden Endgeräten (A, B) ausgetauscht werden, aufzuzeichnen.

6. Verfahren nach einem der vorhergehenden Ansprüche, **dadurch gekennzeichnet, dass** ausgelöst durch die Protokollnachricht alle Nachrichten, welche zwischen den beiden Endgeräten (A, B) ausgetauscht werden, vom konvergenten Messaging System in einer Konversationshistorie eines zugrunde liegenden Nachrichten-Threads gespeichert werden.

7. Verfahren nach einem der vorhergehenden Ansprüche, **dadurch gekennzeichnet, dass** die Endgeräte (A, B) die betreffende Konversationshistorie vom konvergenten Messaging System jederzeit abrufen und einem Benutzer anzeigen können.

8. Verfahren nach Anspruch 7, **dadurch gekennzeichnet, dass** der Abruf der Konversationshistorie durch einen Protokollbefehl ausgelöst wird, der vom Endgerät an das konvergente Messaging System gesendet wird,

9. Verfahren nach einem der vorhergehenden Ansprüche, **dadurch gekennzeichnet, dass** eine Beendigung der Aufzeichnung eines Nachrichtenaustausch durch überschreiten eines Zeitlimits, in dem kein Nachrichtenaustausch stattgefunden hat, ausgelöst wird.

10. Verfahren nach einem der Ansprüche 1-8, **dadurch gekennzeichnet, dass** eine Beendigung der Aufzeichnung eines Nachrichtenaustauschs durch einen dedizierten Protokollbefehl ausgelöst wird, der von einem der Endgeräte an das konvergente Messaging System übermittelt wird.

11. System zum Nachrichtenaustausch mit einem Endgerät (A) und einem konvergenten Messaging System, wobei das Endgerät (A) Mittel zum Erkennen eines Nachrichten-Threads umfasst, sobald das Endgerät (A) von einem anderen Endgerät (B) eine Antwort (NB) auf eine zuvor abgesendete Nachricht (NA) erhält, und das System **dadurch gekennzeichnet ist, dass** das konvergente Messaging System Mittel umfasst, die bei einer Erkennung eines Nachrichten-Threads durch eines der betelligten Endgeräte und ausgelöst durch eine vom Endgerät (A) gesendete Protokollnachricht (S3) eine Aufzeichnung des Nachrichtenaustausches im konvergenten Messaging System durchführen.

12. Datenverarbeitungsprogramm mit einem Programmcode, der auf einer oder mehreren Datenverarbeitungseinrichtungen ausgeführt ein Verfahren nach einem der Ansprüche 1 bis 10 durchführt.

13. Datenverarbeitungsprogrammprodukt, das einen auf einer oder mehreren Datenverarbeitungseinrichtungen ausführbaren Programmcode zur Durchführung des Verfahrens nach einem der Ansprüche 1 bis 10 umfasst.

## Claims

1. Method for message exchange in a mobile telephone system using a convergent messaging system which permits exchange of messages between terminals (A, B) of two or more users, wherein on the part of one terminal, a message thread is recognised as soon as a terminal (A) receives from another terminal (B), a response (NB) to a previously sent message (NA), wherein on recognition by this terminal (A) of a message thread, a recording of the message exchange is triggered in the convergent messaging system, **characterised in that** the recording of the message exchange is triggered by a protocol message (S3) which is sent from the terminal (A), which has detected the message thread, to the convergent messaging system.

2. Method according to one of the preceding claims, **characterised in that** the point in time or the conditions from which/under which the message exchange is stored on the network side, can be selected on the part of the user.

3. Method according to one of the preceding claims, **characterised in that** the previously sent message (NA) is stored as a precaution in the terminal (A) or in a messaging client of the terminal (A) in order to detect a message thread at a later point in time.

4. Method according to one of the preceding claims, **characterised in that** the terminal (A) recognises from a corresponding reference, which has been assigned to the previously sent message (NA), that it is a response to a message (NA) originally sent from the terminal (A).

5. Method according to one of the preceding claims, **characterised in that** the protocol message comprises both the context of the two previously exchanged messages (NA, NB) and a request to the converging messaging system to record all further messages which are exchanged between the two terminals (A, B).

6. Method according to one of the preceding claims, **characterised in that**, triggered by the protocol message, all messages which are exchanged between the two terminals (A, B) are stored by the convergent messaging system in a conversation history of an underlying message thread.

7. Method according to one of the preceding claims, **characterised in that** the terminals (A, B) may call up the relevant conversation history from the convergent messaging system at any time and display it to a user.

8. Method according to claim 7, **characterised in that** the call-up of the conversation history is triggered by a protocol command which is sent from the terminal to the convergent messaging system.

9. Method according to one of the preceding claims, **characterised in that** ending of the recording of a message exchange is triggered by exceeding a time limit, in which no message exchange has taken place.

10. Method according to one of claims 1-8, **characterised in that** ending of the recording of a message exchange is triggered by a dedicated protocol command which is transferred from one of the terminals to the convergent messaging system.

11. System for message exchange using a terminal (A) and a convergent messaging system, wherein the terminal (A) comprises means for recognising a message thread as soon as the terminal (A) receives from another terminal (B), a response (NB) to a previously sent message (NA), and the system is **characterised in that** the convergent messaging system comprises means which carry out recording of the message exchange in the convergent messaging system during recognition of a message thread by one of the participating terminals and triggered by a protocol message (S3) sent from the terminal (A).

12. Data-processing program with a program code which carries out a method according to one of claims 1 to 10 when executed on one or more data-processing devices.

13. Data-processing program product which comprises a program code for carrying out the method according to one of claims 1 to 10 which can be executed on one or more data-processing devices.

## Revendications

1. Procédé pour l'échange de messages dans un système de téléphonie mobile à l'aide d'un système de messagerie convergent qui permet un échange de messages entre des terminaux (A, B) de deux utilisateurs ou plus, étant précisé que du côté d'un terminal, un fil de messages est détecté dès qu'un terminal (A) reçoit d'un autre terminal (B) une réponse (NB) à un message (NA) envoyé précédemment, et que lors de la détection d'un fil de messages par ce terminal (A), un enregistrement de l'échange de messages dans le système de messagerie convergent est déclenché,
**caractérisé en ce que** l'enregistrement de l'échange de messages est déclenché grâce à un message de protocole (S3) qui est envoyé au système de messagerie convergent par le terminal (A) qui a détecté le fil de messages.

2. Procédé selon l'une des revendications précédentes, **caractérisé en ce que** le moment à partir duquel ou les conditions dans lesquelles l'échange de messages est mis en mémoire côté réseau peuvent être choisis côté utilisateur.

3. Procédé selon l'une des revendications précédentes, **caractérisé en ce que** le message (NA) envoyé précédemment est mis en mémoire par précaution dans le terminal (A) ou dans un client de messagerie du terminal (A) afin de détecter à un moment ultérieur un fil de messages.

4. Procédé selon l'une des revendications précédentes, **caractérisé en ce que** le terminal (A) détecte au niveau d'une référence correspondante qui a été affectée au message envoyé précédemment qu'il s'agit d'une réponse à un message (NA) envoyé à l'origine par le terminal (A).

5. Procédé selon l'une des revendications précédentes, **caractérisé en ce que** le message de protocole comprend aussi bien le contexte des deux messages (NA, NB) échangés précédemment qu'une demande faite au système de messagerie convergent d'enregistrer tous les autres messages qui seront échangés entre les deux terminaux (A, B) .

6. Procédé selon l'une des revendications précédentes, **caractérisé en ce que** grâce au message de protocole, tous les messages qui sont échangés entre les deux terminaux (A, B) sont mis en mémoire par le système de messagerie convergent dans un historique de conversations d'un fil de messages de base.

7. Procédé selon l'une des revendications précédentes, **caractérisé en ce que** les terminaux (A, B) peuvent consulter à tout moment l'historique de conversations concerné du système de messagerie convergent et l'afficher pour un utilisateur.

8. Procédé selon la revendication 7, **caractérisé en ce que** la consultation de l'historique de conversations est déclenchée par un ordre de protocole qui est envoyé par le terminal au système de messagerie convergent.

9. Procédé selon l'une des revendications précédentes, **caractérisé en ce qu'**un achèvement de l'enregistrement d'un échange de messages est déclenché par le dépassement d'une limite de temps dans laquelle aucun échange de messages n'a eu lieu.

10. Procédé selon l'une des revendications 1 à 8, **caractérisé en ce qu'**un achèvement de l'enregistrement d'un échange de messages est déclenché par un ordre de protocole dédié qui est transmis par l'un des terminaux au système de messagerie convergent.

11. Système pour l'échange de messages avec un terminal (A) et un système de messagerie convergent, étant précisé que le terminal (A) comprend des moyens pour détecter un fil de messages dès que le terminal (A) reçoit d'un autre terminal (B) une réponse (NB) à un message (NA) envoyé précédemment, et le système est **caractérisé en ce que** le système de messagerie convergent comprend des moyens qui, lors de la détection d'un fil de messages par l'un des terminaux impliqués et grâce à un message de protocole (S3) envoyé par le terminal (A), effectuent un enregistrement de l'échange de messages dans le système de messagerie convergent.

12. Programme informatique avec un code de programme qui, exécuté sur un ou plusieurs dispositifs informatiques, met en oeuvre un procédé selon l'une des revendications 1 à 10.

13. Produit informatique qui comprend un code de programme apte à être exécuté sur un ou plusieurs dispositifs informatiques, pour la mise en oeuvre du procédé selon l'une des revendications 1 à 10.
